Europäisches Patentamt

European Patent Office

Office européen des brevets

(19)

(11) Publication number: 0 392 127
A2

# EUROPEAN PATENT APPLICATION

(21) Application number: 89500069.3

(22) Date of filing: 23.06.89

(51) Int. Cl.5: A01N 61/02, A01N 65/00

(30) Priority: 12.04.89 ES 8901717

(43) Date of publication of application:
17.10.90 Bulletin 90/42

(84) Designated Contracting States:
BE DE FR GB GR IT NL

(71) Applicant: SAININ, S.A.
Massenet, 19
E-08191 Rubi (Barcelona)(ES)

(72) Inventor: Serrallach Julia, José Antonio
Beethoven 9
E-08021 Barcelona(ES)
Inventor: Lewkowycz Kysil, Roman
Bofarull, 46
E-08027 Barcelona(ES)

(74) Representative: Gomez-Acebo y Pombo, José
Miguel
c/o CLARKE, MODET & Co. Paseo de la
Castellana 164
E-28046 Madrid(ES)

(54) An ecological pesticidal composition that does not contaminate the environment, its maufacturing process and its use for control of plant pests.

(57) The composition contains a combination of mineral and/or vegetable oil with a mixture of innocuous and specially selected surface active agents which form with water a microemulsion even at low dosages.

The process includes the mixture of the oil with the surface active agents forming a homogeneous and transparent liquid. The composition, emulsified in water, is applied by spraying the plants and trees and is capable to produce the pests' death by disruption of its biological membranes.

EP 0 392 127 A2

# AN ECOLOGICAL PESTICIDAL COMPOSITION THAT DOES NOT CONTAMINATE THE ENVIRONMENT; ITS MANUFACTURING PROCESS AND ITS USE FOR CONTROL OF PLANT PESTS

### Scope of the invention

The present invention refers to a pesticidal composition, to its manufacturing process and to its use against plant pests, preferably mites, aphids, scales and white fly.

### State of the art

Up to the present moment the pesticides have killed the pests by either one or two action mechanisms: poisoning or asphyxia.

The use of inorganic pesticides has been known for centuries as for example the arsenical compounds against pests of cotton, potatoes, etc.

In the US 1.707.465 patent of W.H. Volck (California Spray - Chemical Co.) the use of mineral oils is described as a quick breaking emulsion with large particle size to control scales in orange-trees and other fruit-trees, applied at high dosages.

In 1.940 appeared the chlorinated pesticides starting with DDT (see the Swiss patent 226.180 of P. Müller, J.R. Geigy AG).

From 1.962 on, the organic synthetic compounds with different chemical strucutres (some of them with systemic action) completed and partially substituted the old arsenal of pesticides (see the German patent 814.152 of G. Schrader - Bayer AG).

The pyrethroides (synthetic analogous of pyretrins) appeared recently with a strong action at low dosages (see the British patent 1.446.304 of the NRDC).

### Objective of the invention

Now it has been discovered that the plant insects may be killed by a pesticidal action totally different from the previous ones. This new mechanism of action is based on damaging one or various vital organs of the pests.

For this reason one of the aims of this invention is to present a pesticidal composition which may be considered as an initiator of a new generation of pesticides.

Another aim of this invention is to present a process for the preparation of this pesticidal composition.

Another objective of the invention is the use of the pesticidal composition against damaging pests of the plants such as mites, aphids, scales and white fly by a new chemical phytosanitary method based on damaging one or different vital organs of the pests.

### Summary of the invention

The invention presents a pesticidal innocuous composition that has no toxic residue. Therefore, it does not contaminate the environment. It is based on biodegradable products and has a very low $LD_{50}$.

The composition of the invention exerts a physical-chemical action on the permeability, that is, affects the behaviour of the biological membranes. It is a simple, original, effective and innocuous solution which cuts the pre-harvest waiting period.

The pesticidal composition of the present invention is a combination of surface agents and mineral and/or vegetable oils, in colloidal state.

Below we describe with detail the compounds that form part of the composition of the invention as well as the form in which this composition is presented, the manufacturing process of the same and its application to control pests.

### a) Mineral oil

The mineral oil should have an unsulfonable residue (saturated fraction) above 90 %, that is, the not saturated fraction of hydrocarbon (with double bonds) must not surpass 10 % to avoid a possible phytotoxicity. The mineral oil can be substituted or mixed with vegetable oil (the mineral and the vegetable oils are innocuous as their $LD_{50}$ oral in rats is of approximately 30 ml/kg). The oil generally is used in a proportion of up to 96 % approximately of the total pesticidal composition.

b) Surface active agents

Certain surface active agents are necessary to form a microemulsion or colloidal solution of oil.

According to the present invention two or more non-ionic and/or anionic surface active agents are necessary. They should be preferably non-toxic as, for example, derivatives of edible fatty acids whose lethal dosage 50 ($LD_{50}$) oral in rats lies between 2.000 and 3.000 mg/kg.

Regarding the non-ionic surface agents the following ones may be considered:
- oxyethylenated fatty acids
- oxyethylenated fatty alcohols
- oxyethylenated oils
- fatty, lineal, saturated, oxyethylenated alcohols
- oxyethylenated alkylphenols and others

Regarding the anionic surface active agents the following ones may be considered:
- dodecylbenzenesulphonic acids and salts
- sulphated fatty alcohols, etc.

The selection depends on the HLB (hydrophylic-lipophylic balance), that is, on the optimum relation between the hydrophylic and lipophylic part of the molecule in order to act simultaneously on the hydrophylic and lipophylic substrates (insect membranes).

All these components are washed off easily with water.

The pesticidal composition of the invention is presented as an emulsifiable liquid concentrate which diluted and applied to the crops produces an easily washable residue.

You can add and dissolve in the composition of the invention repellents, attractants, sexual hormones, antioxidants, absorbants of U.V. light, penetrants and insecticides at low dosages in order to increase the action of the pesticidal composition.

According to the invention, the pesticidal composition is prepared by mixing the mineral and/or vegetable oils with the surface active agents and other optional additives to obtain a homogenous and transparent liquid in form of a self-emulsifiable concentrate which with water gives a particle size mostly of 0,1 to 2 microns of diameter.

For the application of the pesticidal composition of the invention the emulsifiable concentrate is added to water in a proportion of approximately 0,5 to 1 %. Once stirred, it forms an emulsion of oil in water. The surface active agents cover the surface of the globules of the oil.

The particles may range between 0,1 microns and 2 microns of diameter (microemulsion as average).

For example on citrus trees it is applied in a proportion of 20-50 l/ha.

The mixture of the selected surface active agents, at an optimum dosage, added to the oil, has a specific action on the properties of the pest and the plant.

Spray

The concentration of the soluble surface active agent in the spray higher than the CMC (critical micellar concentration) permits the solublization of the oil by the micelles of the surface active agent.

The HLB of the mixture of the surface active agents higher than the HLB of the oil, permits the formation of a colloidal solution and a microemulsion.

The low surface tension enables a maximum coverage of the plant surface as well as of the parasites.

Insect

The product spreads rapidly over the parasite including appendages such as wings, etc.

It adheres well and penetrates into the critical parts such as the intersegmental membranes.

The surface active agent changes the interphase water-cuticular wax eliminating the latter and breaking its continuity (disruption).

The strong solubilization action overcomes all the resistance mechanisms of the parasite due to the waxy epicuticular lipophylic layer. Once the epicuticular layer has been passed the spray penetrates the procuticle towards the epidermic cells (hemolymph). The endocuticle slackens and the structure of the internal hydrophylic proteins breaks down.

There does not exist any possibility of recovering the initial surface. The parasite cannot control neither the wetting nor the penetration (in and out of the water) due to the simultaneous attack on the wax and the proteins.

Plant

A slight solubilization of the cuticular wax of the leaves takes place but due to the thorough wetting with quick draining this effect is temporary and low. This permits its application in crops sensibles to oil in all seasons.

According to this invention this ecological pesticide, that is, the emulsified mineral and/or vegetable oil is potentialized against which the pests cannot develop resistance, assures a varied action affecting neuralgic points of the pests.

Examples of a practical use of the invention

We describe below, for an illustrative but not limitative purpose, examples of the manufacturing process of the pesticidal composition of the invention and of its practical use to control pests of the plants.

1. Manufacturing process

Pour in a stainless steel tank 800 l. (700 kgs.) of mineral oil with an unsulfonable residue of 92 % and a viscosity of 70 S.U.U. at 38oC.

To this oil, on mixing, 40 kgs. of oxyethylenated oleic acid (6 moles of ethylene oxide) are added. Later 20 kgs. of oxyethylenated nonylphenol (with 6 moles of ethylene oxide) are added and finally 50 kgs. of 60 % solution of calcium dodecylbenzenesulphonate.

Once dissolved, the mixture is completed with oil up to 1.000 l. and is stirred once again, thus to obtain a homogenous and transparent liquid.

Application

500 - 1.000 ml of the product are dissolved in 100 lts. of water and with this preparation the plants or trees are sprayed at 6-10 l. per tree or 20 ml. per plant according with the following table II.

Action

The product obtained according to the present invention is identified with the reference no 8902.2 (see table I and II) and was tested against different mites in various crops, comparing the results with known synthetic acaricides.

The results indicate a high acaricidal action and low toxicity for the useful fauna of the pesticidal composition of the invention.

TABLE I

| LABORATORY TEST. PESTICIDAL ACTION (Acaricide) | | | | | | | |
|---|---|---|---|---|---|---|---|
| **ACTION :** | | | | WINTER OVICIDE | ADULTICIDE | | OVICIDE |
| **PEST:** | | | | PANONYCHUS ULMI | P. CITRI | | T.URTICAE |
| **CROP:** | | | | APPLE-TREE | ORANGE-TREE | | GREEN BEANS |
| TREATMENT: | TYPE: | | | **SPRAY** | | | |
| (Spray) | MATERIAL: | | | Winter buds | Leave discs | | |
| | SPRAY APPLIED: (mg/cm2) | | | 4 | 0.7 | | 2 |
| CONTROL: | TYPE: | | | Score | | | |
| | VALUE: | | | % Eclosion | % Death-rate | | % Eclosion |
| | dat: | | | 14 | 0.2 | 5 | 5 |
| **RESULTS:** | | | | | | | |
| COMPOUND | CHEMICAL NAME | CONCENTRATION (%) | DOSAGE (%) | | | | |
| CHECK | - | - | - | 58 | 27 | 86 | 23 |
| 8902.2 | - | - | 0.5 | 13 | 89 | 100 | |
| | | | 1.0 | | | | |
| | | | 1.5 | | | | 1 |
| FLUBENZIMIN | (8) | 50 | 0.1 | 20 | | | |
| AMITRAZ | (9) | 20 | 0.3 | | 76 | 100 | |
| FENBUTESTAN | (10) | 55 | 0.1 | | | | |
| SUMMER OIL | | 83 | 1.5 | | | | 17 |
| dat : DAYS AFTER TREATMENT | | | | | | | |
| (8) = N-3-phenyl-4,6-bis-(trifluormethyl)imino-2-tiazolidinilidenobenzenamine | | | | | | | |
| (9) = NN-di-(2,4-xylyliminomethyl) methylamine | | | | | | | |
| (10) = hexakis(beta, beta-dimethylphenethyl)-distannoxane | | | | | | | |

TABLE II: FIELD TEST. PEST ACTION (Acaricide-Aphicide) AND TOXICITY ON PREDATORS

| ACTION: | | | | PESTICIDE (Acaricide) | | | | TOXICITY PHYTOSEIDS | PESTICIDE (Aphicide) | | |
|---|---|---|---|---|---|---|---|---|---|---|---|
| PEST: | | | | TETRANYCHUS URTICAE | PANONYCHUS CITRI | | | A.SHELDONI : DISAPHIS | | MYZUS-APHIS | |
| CROP: | | | | GREEN BEANS | CLEMENULES | | | LEMON-TREE : APPLE-TREE | | CLEMENULES | |
| TREAT-MENT: (Spray) | TYPE: | | | | | | SPRAY | | | | |
| | MOMENT: | . | | 4 true leaves | Winter rest | | | Budding (sprouting) | Rose Bud | Flowering | |
| | SPRAY APPLIED: (ml/plant): (lt/tree) : | | | 20 | 6 | | | 10 | 1 | 4 | |
| CONTROL: | TYPE: | | | | | | Score | | | | |
| | VALUE: | | | n° adults/plant | n° adults/ 20 leaves | | | % presence phytoseids | % affected sprouts | % Degree of attack | |
| | dat: | | | 0  7  14  20 | 0  17 | | | 14 | 38 | 0  4  7 | |
| RESULTS: | | | | | | | | | | | |
| COMPOUND | CHEMICAL NAME | CONCEN-TRATION (%) | DOSA-GE (%) | | | | | | | | |
| CHECK | – | – | – | 11  9  51  73 | –  – | | | 16 | 18 | 95  94  93 | |
| 8902.2 | – | – | 0.5 | | 124  18 | | | | | 99  52  67 | |
| | | | 1.0 | 12  0  1  2 | | | | 10 | | | |
| | | | 1.5 | | | | | | | 95  11  26 | |
| | | | 2.0 | | | | | | 4 | | |
| | | | 3.0 | | | | | | 0 | | |
| DICOFOL HEZIATIAZOX | (1) (2) | 48 10 | 0.15 0.05 | 10  3  3  3 | 50  0 | | | | | | |
| DICOFOL + TETRADIFON | (1) (3) | 16 6 | 0.2 | | | | | 1  (b) | | | |
| ENDOSULFAN | (4) | 35 | 0.3 | | | | | 10  (a) | | | |
| CLOFENTEZIN | (5) | 50 | 0.06 | | | | | | 27 | | |
| PIRIMICARB | (6) | 50 | 0.05 | | | | | | | 98  93  93 | |
| DIMETHOATE | (7) | 40 | 0.15 | | | | | | | 96  19  24 | |

dat: DAYS AFTER TRATMENT

Clasification of the products according to their toxicity for the phytoseid predator *Euseius stipulatus* (ETSIA-Valencia, Agricultural Entomology, 1987)

TABLE II (Continuation)

(a) = Low toxicity (50-79% population reduction)
(b) = High toxicity ( )99% population reduction)

(1) = 1,1-Bis(p-chlorophenyl)-2 2,2-trichlorethanol
(2) = trans-5-(4 chlorophenyl)-N-cyclo hexyl-4 methyl-2-oxotiazolidine-3-carboxamide
(3) = p-chlorophenyl 2,4,5-trichlorophenyl sulphone
(4) = 6,7,8,9,10,10-Hexachloro-1,5,5a,6,9,9a-hexahydro-6,9-methanol-2,4,3-benzodioxatiepin-3-oxide
(5) = 3,6-bis(2-chlorophenyl)-1,2,4,5-tetrazine
(6) = 5, 6-Dimethyl-2-dimethylamino-4-pyrimidinyl-dimethylcarbamate
(7) = 0, 0-Dimethyl S-(N-methylcarbamoylmethyl) phosphorodithioate

## Claims

1) A pesticidal composition for the control of plant pests containing up to 96 % as maximum of mineral and/or vegetable oil and the rest consisting of at least two surface active agents, anionic and/or nonionic or both, which in water form a microemulsion or colloidal solution.

2) A pesticidal composition according to the claim 1) characterized by the fact that it contains antioxidants, absorbants of the U.V. light, repellents, attractants, pheromones, penetrants and/or adherents

3) A pesticidal composition according to the claim 1) characterized by the fact that the mineral oil has an unsulfonable residue (saturated fraction) over 90 %.

4) A pesticidal composition according to the claim 1) characterized by the fact that the non-ionic or anionic surface active agents are selected from the group of oxyethylenated fatty acids, oxyethylenated fatty alcohols, oxyethylenated oils, fatty lineal saturated oxyethylenated alcohols, oxyethylenated alkylphenols and the like.

5) A pesticidal composition according to the claim 1) characterized by the fact that the anionic surface active agents are selected from dodecylbenzenesulphonic acid group and its derivatives, sulphated fatty alcohols and the like.

6) Process for preparing a pesticidal composition according to the claim 1) to 5) characterized by the mixture of the mineral and/or vegetable oil with at least two surface active agents and other optional additives to form a homogenous and transparent liquid, in form of a self-emulsifiable concentrate, which in water gives an average particle size of 0,1 to 2 microns of diameter, approximately.

7. The use of the composition according to claims 1) to 5) and manufacture as described in claim 6) to be carried out by spraying the plants and trees with a solution of 250 - 3.000 ml. per 100 lts. for the control of plant pests.